(19) **Europäisches Patentamt**
**European Patent Office**
**Office européen des brevets**

(11) **EP 3 923 457 A1**

(12) **EUROPEAN PATENT APPLICATION**
published in accordance with Art. 153(4) EPC

(43) Date of publication:
**15.12.2021 Bulletin 2021/50**

(21) Application number: **20752190.7**

(22) Date of filing: **06.02.2020**

(51) Int Cl.:
**H02K 16/02** (2006.01)     **F16H 49/00** (2006.01)

(86) International application number:
**PCT/JP2020/004455**

(87) International publication number:
**WO 2020/162516 (13.08.2020 Gazette 2020/33)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **07.02.2019   JP 2019021086**

(71) Applicant: **Panasonic Intellectual Property Management Co., Ltd.**
**Osaka-shi, Osaka 540-6207 (JP)**

(72) Inventors:
• **UKAJI, Hajime**
  **Osaka 540-6207 (JP)**

• **ASO, Noritaka**
  **Osaka 540-6207 (JP)**
• **HIRATA, Katsuhiro**
  **Osaka 565-0871 (JP)**
• **NIGUCHI, Noboru**
  **Osaka 565-0871 (JP)**
• **TAKAHARA, Kazuaki**
  **Osaka 565-0871 (JP)**
• **SUZUKI, Hironori**
  **Osaka 565-0871 (JP)**
• **KAMIGAKI, Tsubasa**
  **Osaka 565-0871 (JP)**

(74) Representative: **SSM Sandmair**
**Patentanwälte Rechtsanwalt**
**Partnerschaft mbB**
**Joseph-Wild-Straße 20**
**81829 München (DE)**

(54) **MAGNETIC GEARED MOTOR**

(57)     A magnetic geared motor (1) includes a stator (10), a first inner rotor (30) that is disposed to an inner side of the stator (10) and rotates by a magnetomotive force of the stator (10), a first center rotor (20) disposed between the stator (10) and the first inner rotor (30), a second center rotor (40) disposed to an inner side of the first inner rotor (30), and a second inner rotor (50) disposed to an inner side of the second center rotor (40). The stator (10), the first center rotor (20), the first inner rotor (30), the second center rotor (40), and the second inner rotor (50) are disposed coaxial to each other, and the first inner rotor (30) includes first outer magnetic pole pairs (31) disposed in a circumferential direction and a plurality of first inner magnetic pole pairs (32) disposed in the circumferential direction.

FIG. 1

**Description**

[Technical Field]

The present disclosure relates to a magnetic geared motor.

[Background Art]

In recent years, automatic guided vehicles (AGVs) are used increasingly in plants, warehouses, or the like. An AGV is driven by a motor, for example. A motor for driving an AGV is desired to be a low speed and high torque motor or a high efficiency motor that enables long distance traveling. Accordingly, the use of a magnetic geared motor as a motor for driving an AGV is contemplated.

A magnetic geared motor is an electric rotary machine with an embedded magnetic reduction gear mechanism (magnetic gear) that uses a harmonic magnetic flux, and such a magnetic geared motor includes a high speed rotor, a low speed rotor, and a stator (for example, Patent Literature 1). In the magnetic geared motor, the high speed rotor is rotated by the magnetomotive force of the coils in the stator, and thus the low speed rotor having an output shaft can be rotated in accordance with a predetermined gear ratio (moderating ratio).

[Citation List]

[Patent Literature]

[PTL 1]
Japanese Unexamined Patent Application Publication No. 2013-106401

[Summary of Invention]

[Technical Problem]

Despite the above, it is challenging to obtain a high gear ratio with a magnetic geared motor that includes only a high speed rotor, a low speed rotor, and a stator.

The present disclosure has been made in view of such a challenge and is directed to obtaining a magnetic geared motor having a high gear ratio by incorporating a reduction gear into a magnetic geared motor.

[Solution to Problem]

To address the above, one embodiment of a first magnetic geared motor according to the present invention includes: a stator; a first inner rotor that is disposed to an inner side of the stator in a radial direction and rotates by a magnetomotive force of the stator; a first center rotor that is disposed between the stator and the first inner rotor and rotates in response to rotation of the first inner rotor; a second center rotor disposed to an inner side of the first inner rotor in the radial direction; and a second inner rotor that is disposed to an inner side of the second center rotor in the radial direction and rotates in response to rotation of the first inner rotor and the second center rotor, wherein the stator, the first center rotor, the first inner rotor, the second center rotor, and the second inner rotor are disposed coaxial to each other, and the first inner rotor includes: a plurality of first outer magnetic pole pairs disposed in a circumferential direction; and a plurality of first inner magnetic pole pairs disposed in the circumferential direction.

One embodiment of a second magnetic geared motor according to the present invention includes: a stator; a first inner rotor that is disposed to an inner side of the stator in a radial direction and rotates by a magnetomotive force of the stator; a first center rotor that is disposed between the stator and the first inner rotor and rotates in response to rotation of the first inner rotor; a second inner rotor disposed next to the first inner rotor in an axial direction; a second center rotor disposed to an outer side of the second inner rotor in the radial direction and disposed next to the first center rotor in the axial direction; and an outer rotor disposed to an outer side of the second center rotor in the radial direction, wherein the stator, the first center rotor, the first inner rotor, the second center rotor, the second inner rotor, and the outer rotor are disposed coaxial to each other, and the first inner rotor includes a plurality of first magnetic pole pairs disposed in a circumferential direction.

One embodiment of a third magnetic geared motor according to the present invention includes: a stator; a first inner rotor that is disposed to an inner side of the stator in a radial direction and rotates by a magnetomotive force of the stator; a first outer rotor that is disposed to an outer side of the stator in the radial direction and rotates in response to rotation of the first inner rotor; a second inner rotor disposed next to the first inner rotor in an axial direction; a second center rotor that is disposed to an outer side of the second inner rotor in the radial direction and disposed next to the stator in the axial direction; and a second outer rotor disposed to an outer side of the second center rotor in the radial direction and disposed next to the first outer rotor in the axial direction, wherein the stator, the first outer rotor, the first inner rotor, the second center rotor, the second inner rotor, and the second outer rotor are disposed coaxial to each other, and the first inner rotor includes a plurality of first magnetic pole pairs disposed in a circumferential direction.

One embodiment of a fourth magnetic geared motor according to the present invention includes: a stator; a first outer rotor that is disposed to an outer side of the stator in a radial direction and rotates by a magnetomotive force of the stator; a first center rotor that is disposed between the stator and the first outer rotor and rotates in response to rotation of the first outer rotor; a second center rotor disposed next to the first center rotor in an axial direction; a second inner rotor disposed to an inner side of the second center rotor in the radial direction and disposed next to the stator in the axial direction; and a second outer rotor disposed to an outer side of the second center rotor in the radial direction and disposed next to the first outer rotor in the axial direction, wherein the stator, the first outer rotor, the second inner rotor, the first center rotor, the second center rotor, and the second outer rotor are disposed coaxial to each other, and the first outer rotor includes a plurality of fourth magnetic pole pairs disposed in a circumferential direction.

[Advantageous Effects of Invention]

The present disclosure can provide a magnetic geared motor having a high gear ratio.

[Brief Description of Drawings]

[FIG. 1]

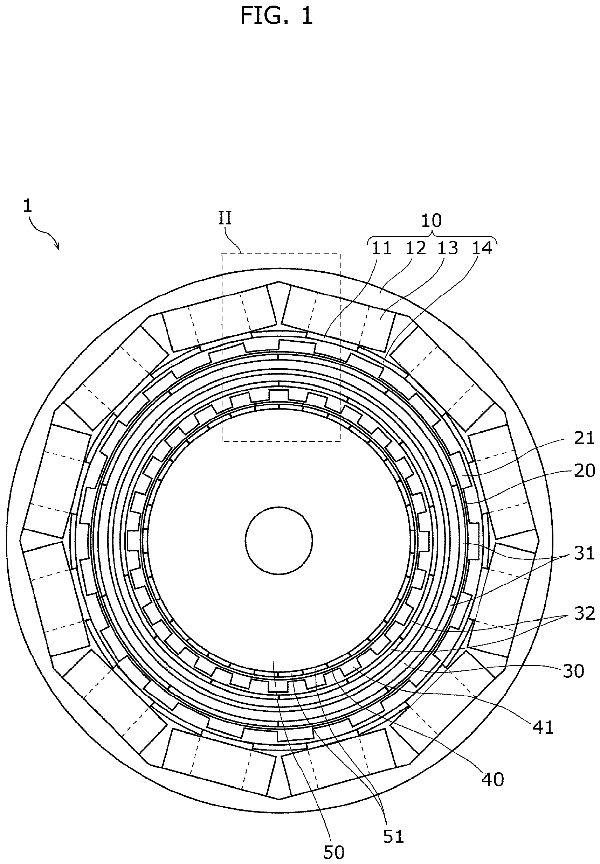

FIG. 1 is a top view of a magnetic geared motor according to Embodiment 1.
[FIG. 2]

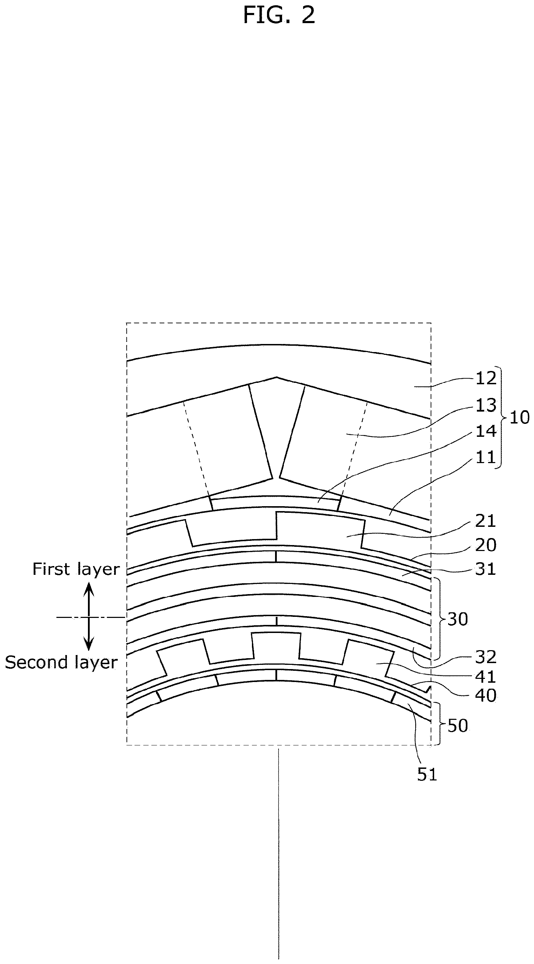

FIG. 2 is an enlarged view of region II enclosed by the dashed line indicated in FIG. 1.
[FIG. 3A]

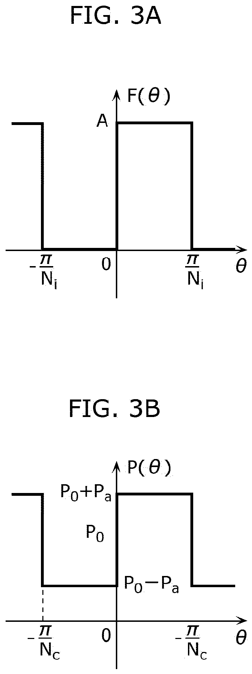

FIG. 3A illustrates magnetomotive force distribution F(θ) in relation to the magnetic poles of an inner gear.
[FIG. 3B]
FIG. 3B illustrates permeance distribution P(θ) of a center gear.
[FIG. 4]

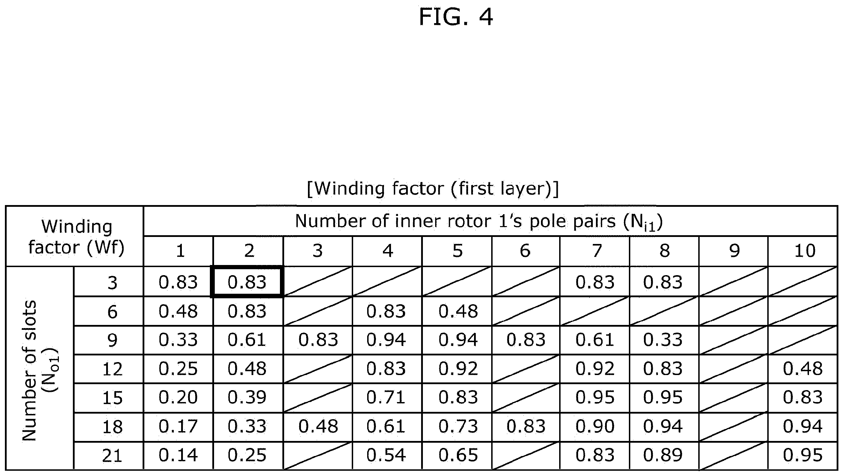

FIG. 4 shows winding factors of a magnetic geared motor constituting a first layer in the magnetic geared motor according to Embodiment 1.
[FIG. 5]

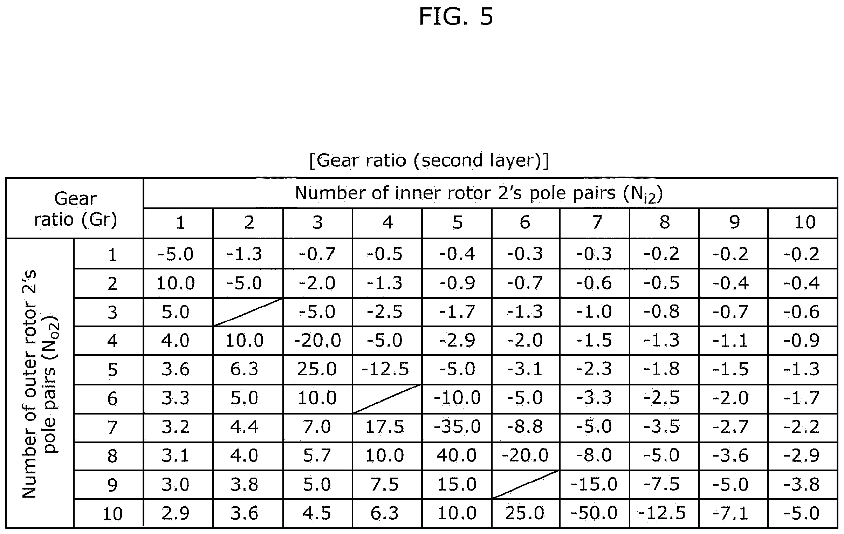

FIG. 5 shows an example of gear ratios of a magnetic reduction gear constituting a second layer in the magnetic geared motor according to Embodiment 1.
[FIG. 6]

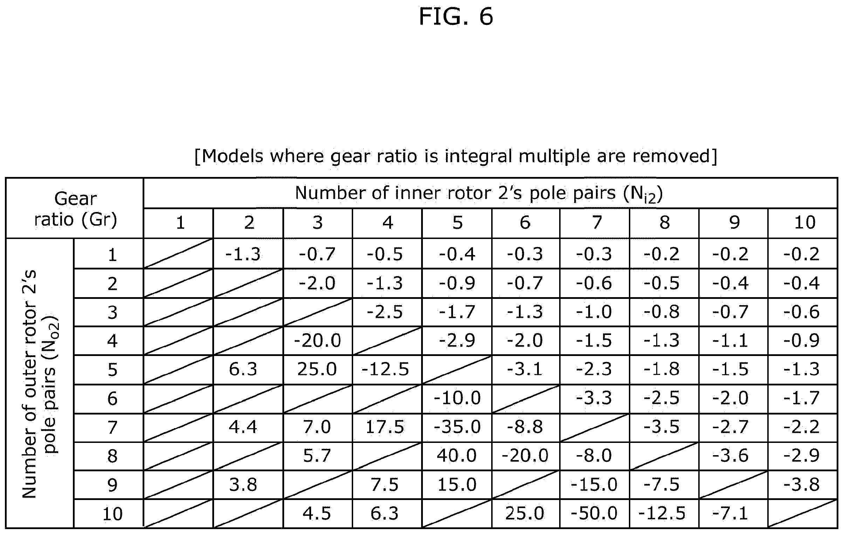

FIG. 6 shows a result obtained after models in which the gear ratio is an integral multiple have been removed from the table illustrated in FIG. 5.
[FIG. 7]

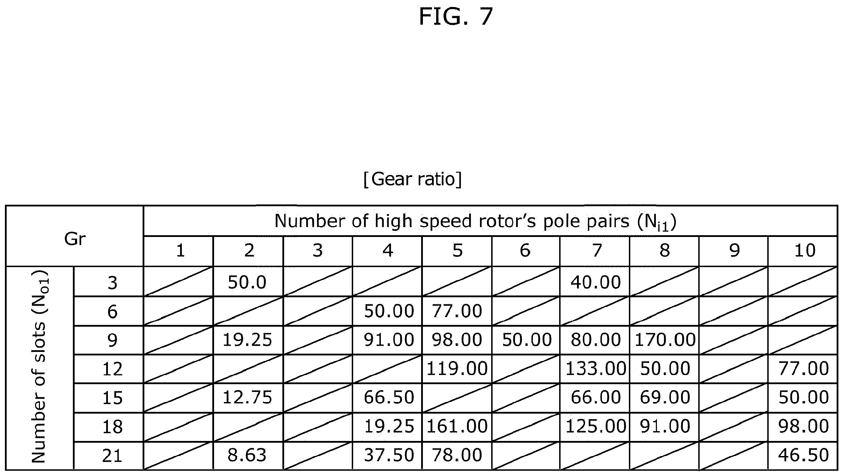

FIG. 7 shows gear ratios of the magnetic geared motor according to Embodiment 1.
[FIG. 8]

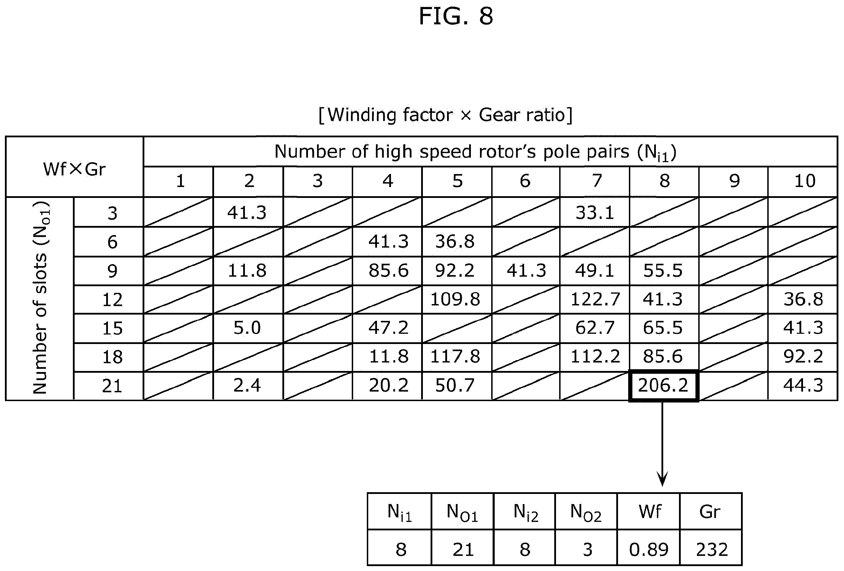

FIG. 8 shows the values of the winding factors × the gear ratios indicated in FIG. 7.
[FIG. 9]

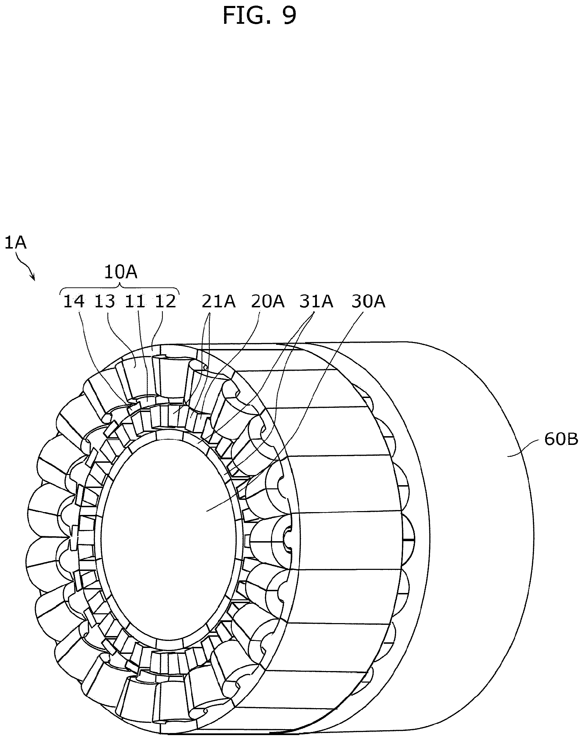

FIG. 9 is a perspective view of a magnetic geared motor according to Embodiment 2.
[FIG. 10]

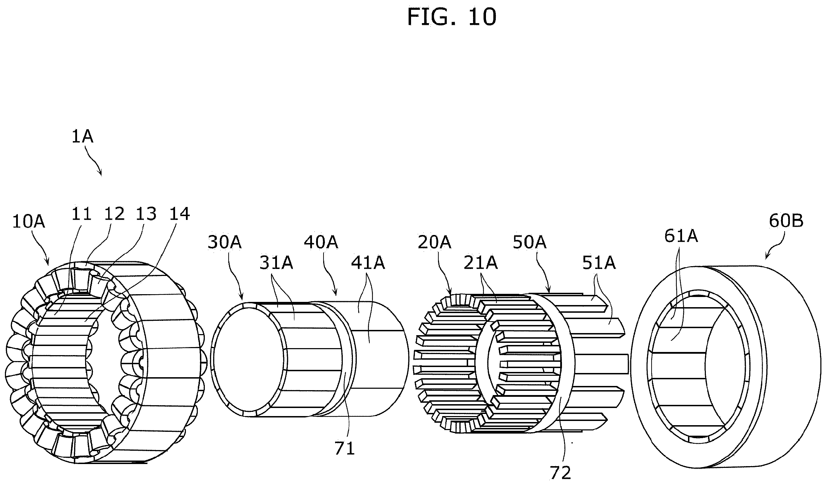

FIG. 10 is an exploded perspective view of the magnetic geared motor according to Embodiment 2.
[FIG. 11]

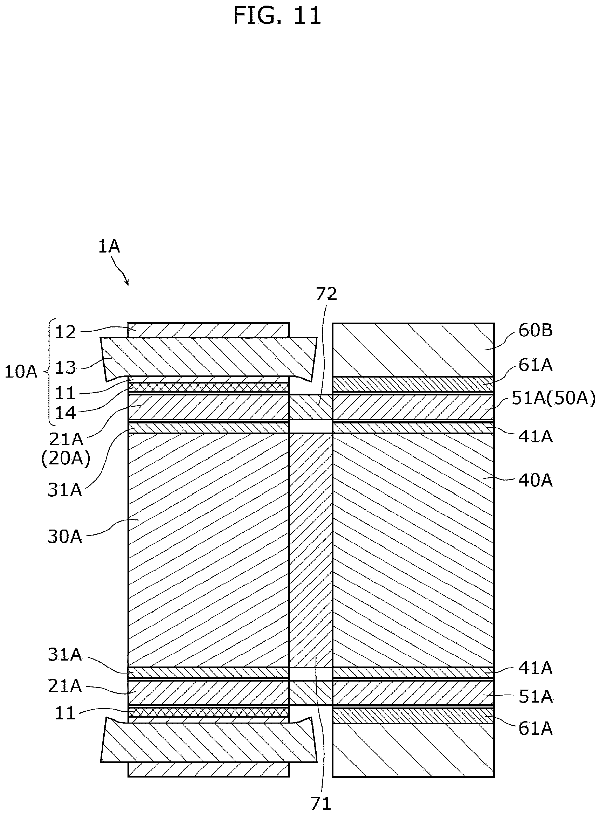

FIG. 11 is a sectional view of the magnetic geared motor according to Embodiment 2.
[FIG. 12]

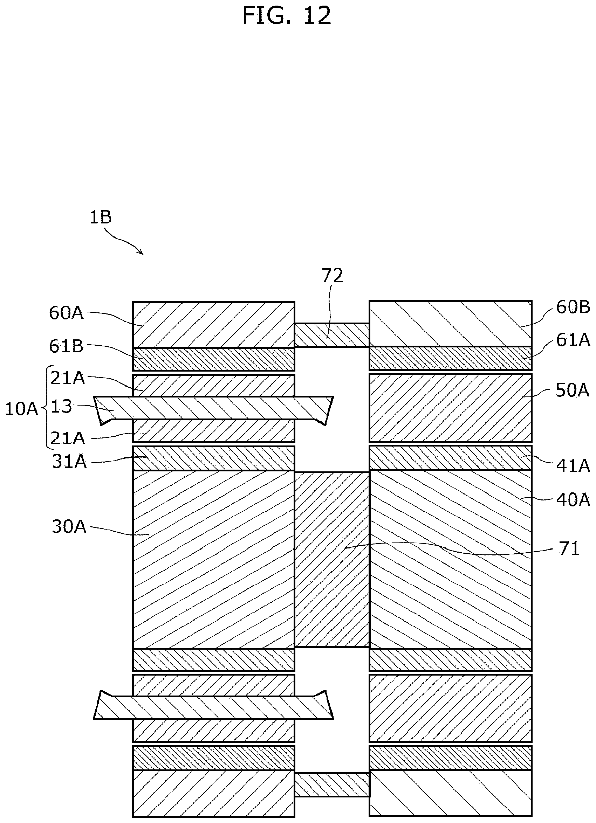

FIG. 12 is a sectional view of a magnetic geared motor according to Embodiment 3.
[FIG. 13]

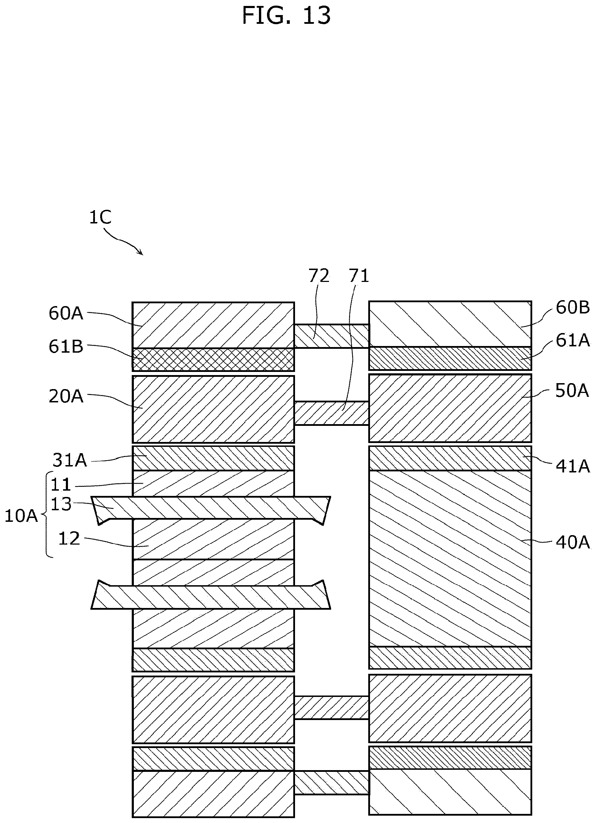

FIG. 13 is a sectional view of a magnetic geared motor according to Embodiment 4.

[Description of Embodiments]

Hereinafter, some embodiments of the present disclosure will be described. It is to be noted that the embodiments described hereinafter illustrate merely specific examples of the present disclosure. Therefore, the numerical values, the constituent elements, the arrangement and the connection modes of the constituent elements, and so on illustrated in the following embodiments are merely examples and are not intended to limit the present disclosure. Accordingly, among the constituent elements in the following embodiments, any constituent element that is not described in the independent claims each expressing the broadest concept of the present disclosure will be construed as an optional constituent element.

Moreover, the drawings are schematic diagrams and do not necessarily provide the exact depictions. In the appended drawings, substantially identical components are given identical reference characters, and duplicate descriptions thereof will be omitted or simplified.

[Embodiment 1]

First, with reference to FIGS. 1 and 2, a configuration of magnetic geared motor 1 according to Embodiment 1 will be described. FIG. 1 is a top view of magnetic geared motor 1 according to Embodiment 1. FIG. 2 is an enlarged view of region II enclosed by the dashed line indicated in FIG. 1.

As illustrated in FIGS. 1 and 2, magnetic geared motor 1 according to the present embodiment has a structure in which a magnetic reduction gear and a motor are integrated into a unit. Specifically, magnetic geared motor 1 has a structure in which a reduction gear serving as a second layer (face 2) is integrated into a magnetic geared motor constituting a first layer (face 1).

In the present embodiment, the second layer is a magnetic reduction gear that uses a magnetic force. Therefore, magnetic geared motor 1 according to the present embodiment has a two-stage structure in which the first layer is a magnetic geared motor and the second layer is a magnetic reduction gear. In this example, the second layer may be a mechanical reduction gear instead of the magnetic reduction gear.

As illustrated in FIGS. 1 and 2, magnetic geared motor 1 includes stator 10, first center rotor 20, first inner rotor 30, second center rotor 40, and second inner rotor 50. Stator 10, first center rotor 20, first inner rotor 30, second center rotor 40, and second inner rotor 50 are disposed coaxial to each other.

Magnetic geared motor 1 according to the present embodiment is constituted by the magnetic geared motor of the first layer and the magnetic reduction gear of the second layer with first inner rotor 30 provided therebetween. Specifically, the magnetic geared motor of the first layer and the magnetic reduction gear of the second layer share first inner rotor 30. The magnetic geared motor of the first layer includes stator 10, first center rotor 20, and first inner rotor 30, and the magnetic reduction gear of the second layer includes first inner rotor 30, second center rotor 40, and second inner rotor 50.

In magnetic geared motor 1 according to the present embodiment, the magnetic geared motor of the first layer and the magnetic reduction gear of the second layer are disposed in a radial direction.

Specifically, stator 10, first center rotor 20, first inner rotor 30, second center rotor 40, and second inner rotor 50 are disposed in this order from the outer side in the radial direction toward the inner side in the radial direction. Therefore, stator 10 is disposed at an outermost position, first center rotor 20 is disposed to the inner side of stator 10 in the radial direction, first inner rotor 30 is disposed to the inner side of first center rotor 20 in the radial direction, second center rotor 40 is disposed to the inner side of first inner rotor 30 in the radial direction, and second inner rotor 50 is disposed to the inner side of second center rotor 40 in the radial direction. In this example, second inner rotor 50 is disposed at an innermost position.

Stator 10, first center rotor 20, first inner rotor 30, second center rotor 40, and second inner rotor 50 are disposed coaxial to each other with a small air gap provided therebetween.

Stator 10 (stator) produces a magnetomotive force. Stator 10 includes a plurality of teeth 11, yoke 12, winding coils 13, and stator magnets 14.

The plurality of teeth 11 are disposed along a circumferential direction. Specifically, the plurality of teeth 11 are disposed at a regular interval along the circumferential direction. In the present embodiment, stator 10 includes 12 teeth 11. Therefore, the number of slots each corresponding to a space between two adjacent teeth 11 is 12.

Moreover, the plurality of teeth 11 are provided radially about the center axis of stator 10. Specifically, each tooth 11 projects from annular yoke 12 and extends toward the inner side in the radial direction. In other words, yoke 12 is a back yoke formed on the outer side of teeth 11.

In the present embodiment, teeth 11 and yoke 12 are integrated into a unit that serves as a stator core. For example, teeth 11 and yoke 12 are formed of a plurality of electromagnetic steel plates stacked on top of each other.

Teeth 11 are each a magnetic tooth formed on the inner side of yoke 12 and are each an electromagnet that produces a magnet force upon the electricity passing through corresponding winding coil 13. Winding coils 13 are each a stator coil provided in stator 10. In the present embodiment, winding coil 13 is a concentrated winding coil wound around each of the plurality of teeth 11. In addition, winding coil 13 is a three-phase winding so that first inner rotor 30 can be rotated as a three-phase synchronous motor. In this example, winding coil 13 may be wound around each tooth 11 with an insulator (not illustrated) provided therebetween.

Stator magnet 14 is disposed between two adjacent teeth 11. Stator magnet 14 is, for example, a permanent magnet. In other words, teeth 11 and stator magnets 14 are disposed in an alternating manner in the circumferential direction. Upon the electricity passing through winding coils 13, teeth 11 and adjacent stator magnets 14 assume opposite polarities. For example, the surfaces of teeth 11 and stator magnets 14 that face the air gap exhibit the N-pole and the S-pole in an alternating manner. In one example, teeth 11 each have the polarity that causes the N-pole to appear on their surface facing the air gap, and stator magnets 14 each have the polarity that causes the S-pole to appear on their surface facing the air gap. In this example, the plurality of teeth 11 and the plurality of stator magnets 14 oppose first center rotor 20.

First center rotor 20 is disposed between stator 10 and first inner rotor 30. First center rotor 20 rotates in response to the rotation of first inner rotor 30.

First center rotor 20 includes a plurality of first magnetic pole pieces 21 disposed in the circumferential direction. The plurality of first magnetic pole pieces 21 serve as a magnetic flux concentration means formed of a magnetic material. The plurality of first magnetic pole pieces 21 are disposed at a regular interval in the circumferential direction. In addition, the plurality of first magnetic pole pieces 21 are disposed radially about the center axis of first center rotor 20.

In the present embodiment, first center rotor 20 is a gear-shaped magnetic body having a configuration in which the plurality of first magnetic pole pieces 21 each project toward stator 10. In this case, first center rotor 20 can be manufactured of gear-shaped electromagnetic steel plates stacked on top of each other.

First inner rotor 30 rotates freely by the magnetomotive force of stator 10. First inner rotor 30 includes a plurality of first outer magnetic pole pairs 31 disposed in the circumferential direction and a plurality of first inner magnetic pole pairs 32 disposed in the circumferential direction.

The plurality of first outer magnetic pole pairs 31 are disposed closer to stator 10 (disposed on the outer side). Specifically, the plurality of first outer magnetic pole pairs 31 oppose first center rotor 20. The plurality of first outer magnetic pole pairs 31 are each a permanent magnet and are arranged such that the N-pole and the S-pole appear evenly in an alternating manner along the circumferential direction. Therefore, the surface of the permanent magnet constituting each first outer magnetic pole pair 31 serves as an air gap surface.

The plurality of first inner magnetic pole pairs 32 are disposed closer to second inner rotor 50 (disposed on the inner side). Specifically, the plurality of first inner magnetic pole pairs 32 oppose second center rotor 40. The plurality of first inner magnetic pole pairs 32 are each a permanent magnet and are arranged such that the N-pole and the S-pole appear evenly in an alternating manner along the circumferential direction. Therefore, the surface of the permanent magnet constituting each first inner magnetic pole pair 32 serves as an air gap surface.

Second center rotor 40 is disposed between first inner rotor 30 and second inner rotor 50. Second center rotor 40 is coupled to first center rotor 20. Therefore, second center rotor 40 rotates in tandem with first center rotor 20. Specifically, in response to the rotation of first center rotor 20, second center rotor 40 rotates along with first center rotor 20. The front portions and the back portions of second center rotor 40 and first center rotor 20 in the axial direction are coupled to each other mechanically by fixing members, for example.

In the present embodiment, first inner rotor 30 rotates at a speed different from the speed at which first center rotor 20 and second center rotor 40 rotate. Specifically, first inner rotor 30 is a high speed rotor that rotates at a higher speed than first center rotor 20 and second center rotor 40, and first center rotor 20 and second center rotor 40 are each a low speed rotor that rotates at a lower speed than first inner rotor 30.

Second center rotor 40 includes a plurality of second magnetic pole pieces 41 disposed in the circumferential direction. The plurality of second magnetic pole pieces 41 serve as a magnetic flux concentration means formed of a magnetic material. The plurality of second magnetic pole pieces 41 are disposed at a regular interval in the circumferential direction. In addition, the plurality of second magnetic pole pieces 41 are disposed radially about the center axis of second center rotor 40.

In the present embodiment, second center rotor 40 is a gear-shaped magnetic body having a configuration in which the plurality of second magnetic pole pieces 41 each project toward first inner rotor 30. In this case, second center rotor 40 can be manufactured of gear-shaped electromagnetic steel plates stacked on top of each other.

Second inner rotor 50 disposed to the inner side of second center rotor 40 in the radial direction rotates in response to the rotation of first inner rotor 30 and second center rotor 40.

Second inner rotor 50 includes a plurality of second magnetic pole pairs 51 disposed in the circumferential direction. The plurality of second magnetic pole pairs 51 are disposed closer to stator 10 (disposed on the outer side). Specifically, the plurality of second magnetic pole pairs 51 oppose second center rotor 40. The plurality of second magnetic pole pairs 51 are each a permanent magnet and are arranged such that the N-pole and the S-pole appear evenly in an alternating manner along the circumferential direction. Therefore, the surface of the permanent magnet constituting each second magnetic pole pair 51 serves as an air gap surface.

In this example, a rotary shaft (shaft) may be disposed at the center of second inner rotor 50.

Next, an operation principle of magnetic geared motor 1 illustrated in FIG. 1 will be described.

Magnetic geared motor 1 according to the present embodiment includes the magnetic geared motor of the first layer and the magnetic reduction gear of the second layer. Then, the torque produced in the first layer is increased in accordance with the different gear ratios (moderating ratios) of the first layer and the second layer, and the increased torque is output from the second layer.

Specifically, first, first inner rotor 30 rotates by the magnetomotive force of winding coils 13 in stator 10 in accordance with the principle of a synchronous motor. To be more specific, upon the electricity passing through winding coils 13 in stator 10, a field current flows through winding coils 13, and a magnetic flux is produced in each tooth 11. The magnetic force produced through the interaction between the magnetic flux produced in each tooth 11 and the magnetic flux produced from each first outer magnetic pole pair 31 of first inner rotor 30 functions as the torque that causes first inner rotor 30 to rotate, and thus first inner rotor 30 rotates.

In response to the rotation of first inner rotor 30, second center rotor 40 rotates through the principle of a magnetic geared motor. Specifically, as first inner rotor 30 rotates, first center rotor 20 is decelerated due to a harmonic magnetic flux in accordance with a predetermined gear ratio (moderating ratio), and first center rotor 20 rotates accordingly.

In a similar manner, in the reduction gear of the second layer as well, as first inner rotor 30 rotates with second inner rotor 50 being fixed, second center rotor 40 is decelerated due to the constraint of the gear in the reduction gear in accordance with a predetermined gear ratio different from the gear ratio of the first layer, and second center rotor 40 rotates accordingly. In magnetic geared motor 1 according to the present embodiment, however, first center rotor 20 and second center rotor 40 are coupled to each other. Therefore, second center rotor 40 rotates at the same speed as and in tandem with the rotation of first center rotor 20 of the first layer.

With this configuration, second inner rotor 50 in the second layer is decelerated in accordance with the difference between the gear ratio of the first layer and the gear ratio of the second layer, and second inner rotor 50 rotates accordingly.

In this manner, in magnetic geared motor 1 according to the present embodiment, the first layer rotates through the operation principle of a magnetic geared motor, the magnetic reduction gear of the second layer coupled to the first layer rotates in response to the rotation of the first layer. Then, the rotor (second inner rotor 50) of the output shaft of the second layer is decelerated in accordance with the relationship between the different gear ratios of the first layer and the second layer, and the rotor (second inner rotor 50) rotates accordingly.

Now, a theory behind the operation principle of magnetic geared motor 1 according to the present embodiment will be described below in detail.

First, in the first layer and the second layer constituting magnetic geared motor 1, a relation among the speed of the inner gear, the speed of the center gear, and the speed of the outer gear is derived. In this example, the inner gear, the center gear, and the outer gear of the first layer correspond to, respectively, first inner rotor 30, first center rotor 20, and stator 10, and the inner gear, the center gear, and the outer gear of the second layer correspond to, respectively, second inner rotor 50, second center rotor 40, and first inner rotor 30.

For the inner gear, the center gear, and the outer gear of each layer, the numbers of their magnetic poles are denoted by $N_i$, $N_c$, $N_o$ respectively; their speeds of rotation are denoted by $\omega_i$, $\omega_c$, $\omega_o$, respectively; and their mechanical angles are each denoted by $\theta$. In addition, the maximum magnetomotive force of the inner gear of each layer is denoted by A, and the mean value and the amplitude of the permeance of the center gear of each layer are denoted by $P_o$ and $P_a$, respectively. Then, magnetomotive force distribution $F(\theta)$ in relation to the magnetic poles of the inner gear and permeance distribution $P(\theta)$ of the center gear are expressed as illustrated in FIGS. 3A and 3B, respectively.

FIG. 3A illustrates magnetomotive force distribution $F(\theta)$ in relation to the magnetic poles of the inner gear. Meanwhile, FIG. 3B illustrates permeance distribution $P(\theta)$ of the center gear.

When magnetomotive force distribution $F(\theta)$ illustrated in FIG. 3A and permeance distribution $P(\theta)$ illustrated in FIG. 3B are each subjected to the Fourier series expansion, Expression 1 and Expression 2 indicated below are obtained.

[Math. 1]

$$F(\theta)=\frac{A}{2}+\sum_{m=1}^{\infty}\frac{2A}{(2m-1)\pi}\sin\{(2m-1)N_i\theta\} \quad \cdots \text{(Expression 1)}$$

[Math. 2]

$$P(\theta)=P_0+\sum_{n=1}^{\infty}\frac{4P_a}{(2n-1)\pi}\sin\{(2n-1)N_c\theta\} \qquad \cdots \text{(Expression 2)}$$

Magnetic flux distribution $\varphi(\theta)$ produced through the modulation of the magnetomotive force of the inner gear by the center gear is expressed by the product of magnetomotive force distribution $F(\theta)$ and permeance distribution $P(\theta)$ and expressed as in Expression 3 indicated below.

[Math. 3]

$$\phi(\theta)=F(\theta)\times P(\theta)$$
$$=\frac{AP_o}{2}+\sum_{n=1}^{\infty}\frac{2AP_a}{(2n-1)\pi}\sin\{(2n-1)N_c\theta\}+\sum_{m=1}^{\infty}\frac{2AP_o}{(2m-1)\pi}\sin\{(2m-1)N_i\theta\}$$
$$+\sum_{m=1}^{\infty}\sum_{n=1}^{\infty}\frac{4AP_a}{(2m-1)(2n-1)\pi^2}\left[\begin{array}{l}\cos\{(2n-1)N_c-(2m-1)N_i\}\theta\\-\cos\{(2n-1)N_c-(2m-1)N_i\}\theta\end{array}\right]$$

$$\cdots \text{(Expression 3)}$$

Moreover, when the inner gear and the center gear rotate at speeds $\omega_i$ and $\omega_c$, respectively, magnetic flux $\varphi_{\Delta t}(\theta)$ held after time $\Delta t$ is expressed as in Expression 4 indicated below.

[Math. 4]

$$\phi_{\Delta t}(\theta)=F_{\Delta t}(\theta)\times P_{\Delta t}(\theta)$$
$$=F(\theta-\omega_i\Delta t)\times P(\theta-\omega_c\Delta t)$$
$$=\frac{AP_o}{2}+\sum_{n=1}^{\infty}\frac{2AP_a}{(2n-1)\pi}\sin\{(2n-1)N_c(\theta-\omega_c\Delta t)\}+\sum_{m=1}^{\infty}\frac{2AP_o}{(2m-1)\pi}\sin\{(2m-1)N_i(\theta-\omega_i\Delta t)\}$$
$$+\sum_{m=1}^{\infty}\sum_{n=1}^{\infty}\frac{4AP_a}{(2m-1)(2n-1)\pi^2}\left[\begin{array}{l}\cos\{(2n-1)N_c-(2m-1)N_i\}\left\{\theta-\frac{(2n-1)N_c\omega_c-(2m-1)N_i\omega_i}{(2n-1)N_c-(2m-1)N_i}\Delta t\right\}\\-\cos\{(2n-1)N_c+(2m-1)N_i\}\left\{\theta-\frac{(2n-1)N_c\omega_c+(2m-1)N_i\omega_i}{(2n-1)N_c+(2m-1)N_i}\Delta t\right\}\end{array}\right]$$

$$\cdots \text{(Expression 4)}$$

Through Expression 4, the order of each component included in the magnetic flux produced upon modulation and the speed of rotation of each component are expressed as summarized in Table 1 below.

[Table 1]

| Harmonic order | Rotation speed |
|---|---|
| $(2n-1)N_c$ | $\omega_c$ |
| $(2m-1)N_i$ | $\omega_i$ |
| $(2n-1)N_c-(2m-1)N_i$ | $\dfrac{(2n-1)N_c\omega_c-(2m-1)N_i\omega_i}{(2n-1)N_c-(2m-1)N_i}$ |
| $(2n-1)N_c+(2m-1)N_i$ | $\dfrac{(2n-1)N_c\omega_c+(2m-1)N_i\omega_i}{(2n-1)N_c+(2m-1)N_i}$ |

Among the components indicated in Table 1, the $(2n - 1)N_c - (2m - 1)N_i$-th order component and the $(2n - 1)N_c + (2m - 1)N_i$-th order component rotate at a speed of rotation different from the speed of rotation of the inner gear and the speed of rotation of the center gear. Accordingly, the number of the magnetic poles that matches the orders of these magnetic flux components may be set in the outer gear. This allows the magnetic flux components and the outer gear to synchronize with each other, and the relation among the speed of the inner gear, the speed of the center gear, and the speed of the outer gear in each layer is determined uniquely. Thus, the inner gear, the center gear, and the outer gear rotate synchronously at different speeds. At this point, Expression 5 and Expression 6 indicated below are obtained as, respectively, the synchronization condition and the speed relation in each layer.

[Math. 5]

$$(2n-1)N_c \mp (2m-1)N_i = N_o$$

$$\Leftrightarrow (2n-1)N_c = N_o \pm (2m-1)N_i \quad \cdots \text{ (Expression 5)}$$

[Math. 6]

$$\frac{(2n-1)N_c\omega_c \mp (2m-1)N_i\omega_i}{(2n-1)N_c \mp (2m-1)N_i} = \omega_o$$

$$\Leftrightarrow (2n-1)N_c\omega_c = N_o\omega_o \pm (2m-1)N_i\omega_i \quad \cdots \text{ (Expression 6)}$$

Meanwhile, in order to obtain a high transmission torque, integers m and n may be selected so as to increase the amplitude of the modulation wave component to be synchronized. Accordingly, (m,n) = (1,1) is selected. In this case, the synchronization condition and the speed relation are expressed as in, respectively, Expression 7 and Expression 8 indicated below.

[Math. 7]

$$N_c = N_o \pm N_i \quad \cdots \text{ (Expression 7)}$$

[Math. 8]

$$N_c\omega_c = N_o\omega_o \pm N_i\omega_i \quad \cdots \text{ (Expression 8)}$$

In this manner, when the number of the magnetic poles of the inner gear, the number of the magnetic poles of the center gear, and the number of the magnetic poles of the outer gear satisfy the synchronization condition expressed by Expression 7 in each layer, the speed relation that is dependent on these numbers of the magnetic poles holds among these gears. Thus, if the speed of rotation is determined for two of these gears, the speed of the remaining one gear is determined uniquely.

In this example, as described above, magnetic geared motor 1 according to the present embodiment includes the magnetic geared motor of the first layer and the magnetic reduction gear of the second layer. Therefore, a different set of numbers of the magnetic poles is set for each of the first layer and the second layer. At this point, the synchronization condition and the speed relation in each layer are expressed as in, respectively, Expression 7 and Expression 8 indicated above. Meanwhile, when the magnetic gear trains of the respective layers satisfy the respective synchronization conditions expressed by Expression 9 and Expression 10 indicated blow, the respective speed relations indicated in Expression 11 and Expression 12 below are obtained.

[Math. 9]

$$N_{c1} = N_{o1} \pm N_{i1} \quad \cdots \text{(Expression 9)}$$

[Math. 10]

$$N_{c2} = N_{o2} \pm N_{i2} \quad \cdots \text{(Expression 10)}$$

[Math. 11]

$$N_{c1}\omega_{c1} = N_{o1}\omega_{o1} + N_{i1}\omega_{i1} \quad \cdots \text{(Expression 11)}$$

[Math. 12]

$$N_{c2}\omega_{c2} = N_{o2}\omega_{o2} + N_{i2}\omega_{i2} \quad \cdots \text{(Expression 12)}$$

In this example, the subscripts "1" and "2" in Expression 9 to Expression 12 mean the first layer and the second layer, respectively.

In magnetic geared motor 1 according to the present embodiment, first center rotor 20 and second center rotor 40 are coupled to each other, and first inner rotor 30 is shared by the first layer and the second layer. Therefore, the relations expressed as in Expression 13 and Expression 14 below are obtained.

[Math. 13]

$$\omega_{c1} = \omega_{c2} \quad \cdots \text{(Expression 13)}$$

[Math. 14]

$$\omega_{i1} = \omega_{o2} = \omega \quad \cdots \text{(Expression 14)}$$

In magnetic geared motor 1 according to the present embodiment, as first center rotor 20 of the first layer is decelerated and rotates accordingly, second center rotor 40 of the second layer rotates at the same speed as first center rotor 20. Accordingly, through Expression 11 and Expression 14 indicated above, first center rotor 20 of the first layer rotates at speed of rotation $\omega_{c1}$ indicated in Expression 15 below, and second center rotor 40 of the second layer rotates at speed of rotation $\omega_{c2}$ indicated in Expression 16 below.

[Math. 15]

$$\omega_{c1} = \frac{N_{i1}}{N_{c1}} \omega \qquad \cdots \text{(Expression 15)}$$

[Math. 16]

$$\omega_{c2} = \omega_{c1} = \frac{N_{i1}}{N_{c1}} \omega \qquad \cdots \text{(Expression 16)}$$

Then, speed of rotation $\omega_{i2}$ of the output of the magnetic reduction gear of the second layer is expressed as in Expression 17 below through Expression 12, Expression 14, and Expression 16.

[Math. 17]

$$\omega_{i2} = \frac{N_{i1}N_{c2} - N_{c1}N_{o2}}{N_{c1}N_{i2}} \omega \qquad \cdots \text{(Expression 17)}$$

Accordingly, gear ratio (moderating ratio) Gr of the input and output shafts in magnetic geared motor 1 is expressed as in Expression 18 below.

[Math. 18]

$$Gr = \frac{N_{c1}N_{i2}}{N_{i1}N_{c2} - N_{c1}N_{o2}} \qquad \cdots \text{(Expression 18)}$$

In this manner, in magnetic geared motor 1 according to the present embodiment, the moderating ratio of the input and output shafts is determined uniquely, and thus magnetic geared motor 1 can be used as a reduction gear. Accordingly, as different speed relations are set for the magnetic gear trains of the two layers, namely the first layer and the second layer, the mechanism that can receive two inputs of different speed in the second layer that includes the output shaft makes it possible to obtain a high gear ratio with a smaller number of magnetic poles than in a conventional harmonic magnetic reduction gear. Accordingly, magnetic geared motor 1 having a high gear ratio can be provided.

Next, with reference to FIGS. 4 to 8, an example of selecting the number of poles for magnetic geared motor 1 according to the present embodiment will be described.

First, the condition for each component is set in magnetic geared motor 1, and an example of a winding factor (Wf) of the magnetic geared motor constituting the first layer is calculated. Then, the result summarized in FIG. 4 is obtained. In FIG. 4, the winding factor is calculated for each set of the number of the pole pairs ($N_{i1}$) of first outer magnetic pole pairs 31 of first inner rotor 30 and the number of the slots ($N_{o1}$) in stator 10.

In this case, when the gear ratio of the magnetic reduction gear constituting the second layer is calculated based on the winding factor (0.83) held in a case where, for example, the number of the pole pairs ($N_{i1}$) of first outer magnetic pole pairs 31 of first inner rotor 30 is 2 and the number of the slots ($N_{o1}$) in stator 10 is 3 in FIG. 4, the result summarized in FIG. 5 is obtained.

In this example, if the gear ratio is an integral multiple, the short circuit of the magnetic flux may increase to cause a cogging torque. Therefore, sets in which the gear ratio in the magnetic geared motor of the first layer is an integral multiple are removed from the table shown in FIG. 5, and then only the sets illustrated in FIG. 6 remain.

In this case, the gear ratio in each set of the number of the pole pairs ($N_{i1}$) of first outer magnetic pole pairs 31 of first inner rotor 30 and the number of the slots ($N_{o1}$) in stator 10 results in as summarized in FIG. 7. In this example, the direction of rotation is not taken into account, and thus the gear ratio is indicated by the absolute value when the gear ratio assumes a negative value.

In this manner, the results summarized in FIGS. 6 and 7 can be obtained for each of the entire sets of the number of the pole pairs ($N_{i1}$) of first outer magnetic pole pairs 31 of first inner rotor 30 and the number of the slots ($N_{o1}$) in stator 10.

Then, when the product of the winding factor (Wf) and the gear ratio (Gr) is calculated from these results, the result summarized in FIG. 8 is obtained. In FIG. 8, when a model with the largest product of the winding factor (Wf) and the gear ratio (Gr) is extracted, this model corresponds to a case (Wf $\times$ Gr = 206.2) where the number of the pole pairs ($N_{i1}$) of first outer magnetic pole pairs 31 of first inner rotor 30 is 8 and the number of the slots ($N_{o1}$) in stator 10 is 21.

In other words, this result indicates that a model where the magnetic geared motor of the first layer is a 16 pole 21 slot magnetic geared motor and the magnetic reduction gear of the second layer is a 16 pole 6 pole magnetic reduction gear (a 16 pole 21 slot-16 pole 6 pole model) may be employed within a range where the number of the poles is up to around 20.

It is to be noted that, in the case of Wf $\times$ Gr = 206.2, the number of the pole pairs ($N_{i1}$) of first outer magnetic pole pairs 31 of first inner rotor 30, the number of the slots ($N_{o1}$) in stator 10, the number of the pole pairs ($N_{i2}$) of second magnetic pole pairs 51 of second inner rotor 50, the number of the pole pairs ($N_{i2}$) of first inner magnetic pole pairs 32 of first inner rotor 30, the winding factor (Wf), and the gear ratio (Gr) assume the values shown in FIG. 8.

[Embodiment 2]

Next, with reference to FIGS. 9 to 11, magnetic geared motor 1A according to Embodiment 2 will be described. FIG. 9 is a perspective view of magnetic geared motor 1A according to Embodiment 2. FIG. 10 is an exploded perspective view of magnetic geared motor 1A. FIG. 11 is a sectional view of magnetic geared motor 1A.

As with magnetic geared motor 1 according to Embodiment 1 described above, magnetic geared motor 1A according to the present embodiment has a structure in which a magnetic geared motor and a reduction gear are integrated into a unit. Specifically, magnetic geared motor 1A has a configuration in which a reduction gear serving as a second layer is integrated into a magnetic geared motor constituting a first layer. In the present embodiment as well, the second layer is a magnetic reduction gear that uses a magnetic force. Alternatively, the second layer may be a mechanical reduction gear.

As illustrated in FIGS. 9 to 11, magnetic geared motor 1A according to the present embodiment includes stator 10A, first center rotor 20A, first inner rotor 30A, second inner rotor 40A, second center rotor 50A, and second outer rotor 60B. Stator 10A, first center rotor 20A, first inner rotor 30A, second inner rotor 40A, second center rotor 50A, and second outer rotor 60B are disposed coaxial to each other.

In magnetic geared motor 1A according to the present embodiment, stator 10A, first center rotor 20A, and first inner rotor 30A constitute the magnetic geared motor of the first layer, and second inner rotor 40A, second center rotor 50A, and second outer rotor 60B constitute the magnetic reduction gear of the second layer.

Moreover, whereas magnetic geared motor 1 according to Embodiment 1 described above has the magnetic geared motor and the reduction gear disposed in the radial direction, magnetic geared motor 1A according to the present embodiment has the magnetic geared motor and the reduction gear disposed in the axial direction. Accordingly, in magnetic geared motor 1A according to the present embodiment, the magnetic geared motor of the first layer and the magnetic reduction gear of the second layer are disposed in the axial direction.

In the magnetic geared motor of the first layer, stator 10A, first center rotor 20A, and first inner rotor 30A are disposed in this order from the outer side in the radial direction toward the inner side in the radial direction. Stator 10A, first center rotor 20A, and first inner rotor 30A are disposed coaxial to each other. Stator 10A, first center rotor 20A, and first inner rotor 30A are disposed coaxial to each other with a small air gap provided therebetween.

Similarly to Embodiment 1 described above, stator 10A includes a plurality of teeth 11, yoke 12, winding coils 13, and stator magnets 14.

Similarly to Embodiment 1 described above, first center rotor 20A is disposed between stator 10A and first inner rotor 30A and rotates in response to the rotation of first inner rotor 30A. In addition, first center rotor 20A includes a plurality of first magnetic pole pieces 21A disposed in a circumferential direction. The plurality of first magnetic pole pieces 21A serve as a magnetic flux concentration means formed of a magnetic material. The plurality of first magnetic pole pieces 21A are disposed at a regular interval in the circumferential direction. In addition, the plurality of first magnetic pole pieces 21A are disposed radially about the center axis of first center rotor 20A.

First inner rotor 30A rotates by the magnetomotive force of stator 10A. First inner rotor 30A includes a plurality of first magnetic pole pairs 31A disposed in the circumferential direction. The plurality of first magnetic pole pairs 31A oppose first center rotor 20A. The plurality of first magnetic pole pairs 31A are each a permanent magnet and are arranged such that the N-pole and the S-pole appear evenly in an alternating manner along the circumferential direction.

Meanwhile, in the magnetic reduction gear of the second layer, second inner rotor 40A, second center rotor 50A, and second outer rotor 60B are disposed in this order from the inner side in the radial direction toward the outer side in the radial direction. Second inner rotor 40A, second center rotor 50A, and second outer rotor 60B are disposed coaxial to each other. Second inner rotor 40A, second center rotor 50A, and second outer rotor 60B are disposed coaxial to each other with a small air gap provided therebetween.

Second inner rotor 40A is disposed next to first inner rotor 30A in the axial direction. In addition, second inner rotor 40A is coupled to first inner rotor 30A. Therefore, second inner rotor 40A rotates in tandem with first inner rotor 30A. Specifically, in response to the rotation of first inner rotor 30A, second inner rotor 40A rotates along with first inner rotor 30A. In the present embodiment, second inner rotor 40A and first inner rotor 30A are coupled to each other mechanically by annular first fixing member 71 sandwiched by second inner rotor 40A and first inner rotor 30A. It is to be noted that the method of coupling second inner rotor 40A and first inner rotor 30A is not limited to this example.

Second inner rotor 40A includes a plurality of second magnetic pole pairs 41A disposed in the circumferential direction. The plurality of second magnetic pole pairs 41A oppose second center rotor 50A. The plurality of second magnetic pole pairs 41A are each a permanent magnet and are arranged such that the N-pole and the S-pole appear evenly in an alternating manner along the circumferential direction.

In the present embodiment, the diameter of second inner rotor 40A is equal to the diameter of first inner rotor 30A. In other words, second inner rotor 40A and first inner rotor 30A have the same diameter.

Second center rotor 50A is disposed to the outer side of second inner rotor 40A in the radial direction and disposed next to first center rotor 20A in the axial direction. In addition, second center rotor 50A is coupled to first center rotor 20A. Therefore, second center rotor 50A rotates in tandem with first center rotor 20A. Specifically, in response to the rotation of first center rotor 20A, second center rotor 50A rotates along with first center rotor 20A. In the present embodiment, second center rotor 50A and first center rotor 20A are coupled to each other mechanically by annular second fixing member 72 sandwiched by second center rotor 50A and first center rotor 20A. It is to be noted that the method of coupling second center rotor 50A and first center rotor 20A is not limited to this example.

Second center rotor 50A includes a plurality of second magnetic pole pieces 51A disposed in the circumferential direction. The plurality of second magnetic pole pieces 51A serve as a magnetic flux concentration means formed of a magnetic material. The plurality of second magnetic pole pieces 51A are disposed at a regular interval in the circumferential direction. In addition, the plurality of second magnetic pole pieces 51A are disposed radially about the center axis of second center rotor 50A.

Second outer rotor 60B is disposed to the inner side of second center rotor 50A in the radial direction. Second outer rotor 60B rotates in response to the rotation of second inner rotor 40A and second center rotor 50A.

Second outer rotor 60B includes a plurality of third magnetic pole pairs 61A disposed in the circumferential direction. The plurality of third magnetic pole pairs 61A oppose second center rotor 50A. The plurality of third magnetic pole pairs 61A are each a permanent magnet and are arranged such that the N-pole and the S-pole appear evenly in an alternating manner along the circumferential direction.

In this example, a rotary shaft (shaft) serving as an output shaft may be disposed at the center of second outer rotor 60B.

Next, an operation principle of magnetic geared motor 1A illustrated in FIGS. 9 to 11 will be described.

Similarly to Embodiment 1 described above, magnetic geared motor 1A according to the present embodiment includes the magnetic geared motor of the first layer and the magnetic reduction gear of the second layer. Then, the torque produced in the first layer is increased in accordance with the different gear ratios (moderating ratios) of the first layer and the second layer, and the increased torque is output from the second layer.

Specifically, first, first inner rotor 30A rotates by the magnetomotive force of winding coils 13 in stator 10A in accordance with the principle of a synchronous motor. At this point, since first inner rotor 30A and second inner rotor 40A are coupled to each other, second inner rotor 40A of the second layer rotates at the same speed as and in tandem with the rotation of first inner rotor 30A of the first layer.

In addition, in response to the rotation of first inner rotor 30A, first center rotor 20A rotates through the principle of a magnetic geared motor. Specifically, as first inner rotor 30A rotates, first center rotor 20A is decelerated due to a harmonic magnetic flux in accordance with a predetermined gear ratio (moderating ratio), and first center rotor 20A rotates accordingly. In a similar manner, in the reduction gear of the second layer as well, as second inner rotor 40A rotates with second outer rotor 60B being fixed, second center rotor 50A is decelerated due to the constraint of the gear in the reduction gear in accordance with a predetermined gear ratio different from the gear ratio of the first layer, and second center rotor 50A rotates accordingly. In magnetic geared motor 1A according to the present embodiment, however, first center rotor 20A and second center rotor 50A are coupled to each other. Therefore, second center rotor 50A rotates at the same speed as and in tandem with the rotation of first center rotor 20A of the first layer.

With this configuration, second outer rotor 60B in the second layer is decelerated in accordance with the difference between the gear ratio of the first layer and the gear ratio of the second layer, and second outer rotor 60B rotates accordingly.

In this manner, in magnetic geared motor 1A according to the present embodiment, the first layer rotates through the operation principle of a magnetic geared motor, the magnetic reduction gear of the second layer coupled to the first layer rotates in response to the rotation of the first layer. Then, the rotor (second outer rotor 60B) of the output shaft of the second layer is decelerated in accordance with the relationship between the different gear ratios of the first layer and the second layer, and the rotor (second outer rotor 60B) rotates accordingly.

Now, a theory behind the operation principle of magnetic geared motor 1A according to the present embodiment will be described below in detail.

First, a relation among the speed of the inner gear, the speed of the center gear, and the speed of the outer gear in each of the first layer and the second layer constituting magnetic geared motor 1A can be derived in a similar manner to Embodiment 1 described above. In other words, Expression 1 to Expression 12 apply in a similar manner to Embodiment 1 described above. In the present embodiment, the inner gear, the center gear, and the outer gear of the first layer correspond to, respectively, first inner rotor 30A, first center rotor 20A, and stator 10A, and the inner gear, the center gear, and the outer gear of the second layer correspond to, respectively, second inner rotor 40A, second center rotor 50A, and second outer rotor 60B.

Then, in magnetic geared motor 1A according to the present embodiment, first inner rotor 30A of the first layer and second inner rotor 40A of the second layer are coupled to each other, and first center rotor 20A of the first layer and second center rotor 50A of the second layer are coupled to each other. Therefore, the relations indicated in Expression 19 and Expression 20 below are obtained.

[Math. 19]

$$\omega_i = \omega_{i1} = \omega_{i2} \quad \cdots \text{(Expression 19)}$$

[Math. 20]

$$\omega_c = \omega_{c1} = \omega_{c2} \quad \cdots \text{(Expression 20)}$$

Moreover, in magnetic geared motor 1A according to the present embodiment as well, since the first layer is composed of the magnetic geared motor, when the inner gear is an input shaft, the outer gear of the first layer (i.e., stator 10) is a stationary shaft, the center gear of the first layer is a free shaft, and the outer gear of the second layer is an output shaft and when Expression 19 and Expression 20 are substituted into Expression 11 and Expression 12 with $\omega_{o1} = \omega_{o2} = 0$ be true, gear ratio (moderating ratio) Gr of the input and output shafts in magnetic geared motor 1A according to the present embodiment is expressed by Expression 21 indicated below.

[Math. 21]

$$Gr = \frac{\omega_i}{\omega_{o2}} = \frac{N_{c1} - N_{o2}}{N_{i1}N_{c2} - N_{c1}N_{i2}} \quad \cdots \text{(Expression 21)}$$

In this manner, in magnetic geared motor 1A according to the present embodiment as well, the moderating ratio of the input and output shafts is determined uniquely, and thus magnetic geared motor 1 can be used as a reduction gear. Accordingly, in the present embodiment as well, as different speed relations are set for the magnetic gear trains of the two layers, namely the first layer and the second layer, the mechanism that can receive two inputs of different speed in the second layer that includes the output shaft makes it possible to obtain a high gear ratio with a smaller number of magnetic poles than in a conventional harmonic magnetic reduction gear. Accordingly, magnetic geared motor 1A having a high gear ratio can be provided.

The number of poles in magnetic geared motor 1A according to the present embodiment can be selected in a similar manner to Embodiment 1 described above.

In addition, first center rotor 20A may be coupled not to second center rotor 50A but to second outer rotor 60B. In this case, in the second layer, second center rotor 50A that rotates in response to the rotation of second inner rotor 40A and second outer rotor 60B is decelerated in accordance with the difference between the gear ratio of the first layer and the gear ratio of the second layer, and second center rotor 50A rotates accordingly.

Moreover, first center rotor 20A and second outer rotor 60B may be coupled to each other, and first inner rotor 30A may be coupled not to second inner rotor 40A but to second center rotor 50A. In this case, in the second layer, second inner rotor 40A that rotates in response to the rotation of second outer rotor 60B and second center rotor 50A is decelerated in accordance with the difference between the gear ratio of the first layer and the gear ratio of the second layer, and second inner rotor 40A rotates accordingly.

[Embodiment 3]

Next, with reference to FIG. 12, magnetic geared motor 1B according to Embodiment 3 will be described. FIG. 12 is a sectional view of magnetic geared motor 1B according to Embodiment 3.

Magnetic geared motor 1B according to Embodiment 3 differs from magnetic geared motor 1A according to Embodiment 2 in that the first layer does not include first center rotor 20A but instead includes first outer rotor 60A and in that first inner rotor 30A, stator 10, and first outer rotor 60A are disposed in this order from the inner side in the radial direction toward the outer side in the radial direction in the first layer.

In addition, first outer rotor 60A and second outer rotor 60B are coupled to each other mechanically by annular second fixing member 72 sandwiched by first outer rotor 60A and second outer rotor 60B. Furthermore, first outer rotor 60A is provided with fourth magnetic pole pairs 61B.

In this case, in the second layer, second center rotor 50A that rotates in response to the rotation of second inner rotor 40A and second outer rotor 60B is decelerated in accordance with the difference between the gear ratio of the first layer and the gear ratio of the second layer, and second center rotor 50A rotates accordingly.

Meanwhile, first inner rotor 30A may be coupled not to second inner rotor 40A but to second center rotor 50A. In this case, in the second layer, second inner rotor 40A is decelerated in accordance with the difference between the gear ratio of the first layer and the gear ratio of the second layer, and second inner rotor 40A rotates accordingly.

Moreover, first outer rotor 60A may be coupled not to second outer rotor 60B but to second center rotor 50A. In this case, in the second layer, second outer rotor 60B that rotates in response to the rotation of second inner rotor 40A and second center rotor 50A is decelerated in accordance with the difference between the gear ratio of the first layer and the gear ratio of the second layer, and second outer rotor 60B rotates accordingly.

[Embodiment 4]

Next, with reference to FIG. 13, magnetic geared motor 1C according to Embodiment 4 will be described. FIG. 13 is a sectional view of magnetic geared motor 1C according to Embodiment 4.

Magnetic geared motor 1C according to Embodiment 4 differs from magnetic geared motor 1B according to Embodiment 3 in that the first layer does not include first inner rotor 30A but instead includes first center rotor 20A and in that stator 10, first center rotor 20A, and first outer rotor 60A are disposed in this order from the inner side in the radial direction toward the outer side in the radial direction in the first layer.

In addition, first center rotor 20A and second center rotor 50A are coupled to each other mechanically by annular second fixing member 72 sandwiched by first center rotor 20A and second center rotor 50A.

Moreover, first outer rotor 60A rotates by the magnetomotive force of stator 10A, and first center rotor 20A rotates in response to the rotation of first outer rotor 60A.

In this case, in the second layer, second inner rotor 40A that rotates in response to the rotation of second outer rotor 60B and second center rotor 50A is decelerated in accordance with the difference between the gear ratio of the first layer and the gear ratio of the second layer, and second inner rotor 40A rotates accordingly.

Moreover, first center rotor 20A may be coupled not to second center rotor 50A but to second inner rotor 40A. In this case, in the second layer, second center rotor 50A that rotates in response to the rotation of second outer rotor 60B and second inner rotor 50A is decelerated in accordance with the difference between the gear ratio of the first layer and the gear ratio of the second layer, and second center rotor 50A rotates accordingly.

Moreover, first center rotor 20A may be coupled to second inner rotor 40A, and first outer rotor 60A may be coupled to second center rotor 50. In this case, in the second layer, second outer rotor 60B that rotates in response to the rotation of second center rotor 50A and second inner rotor 50A is decelerated in accordance with the difference between the gear ratio of the first layer and the gear ratio of the second layer, and second outer rotor 60B rotates accordingly.

[Variations]

Thus far, a magnetic geared motor according to the present disclosure has been described based on Embodiments 1 to 4, but the present disclosure is not limited to Embodiments 1 to 4 described above.
For example, a concentrated winding coil is used as winding coil 13 in stator 10 in Embodiments 1 to 4 described above, but this is not a limiting example. For example, a distributed winding coil may be used as winding coil 13.
The reduction gear of the second layer is a magnetic reduction gear in Embodiments 1 to 4 described above, but this is not a limiting example. For example, the reduction gear of the second layer may be a mechanical reduction gear that uses a gear mechanism. In other words, the second inner rotor, the second center rotor, and the second outer rotor may each be a mechanical reduction gear, such as a planetary gear or a strain wave gear, having a gear.
In Embodiments 1 to 4 described above, two or more reduction gears may be combined in the second layer.
A radial-type magnetic geared motor is used in Embodiments 1 to 4 described above, but an axial-type magnetic geared motor may instead be used.
Moreover, an embodiment obtained by making various modifications that a person skilled in the art can conceive of to the foregoing embodiments and an embodiment achieved by combining, as desired, the constituent elements and the functions of the foregoing embodiments within the scope that does not depart from the spirit of the present disclosure are also encompassed by the present disclosure.

[Industrial Applicability]

The present disclosure can be used in various electrical apparatuses, including an AGV.

[Reference Signs List]

| 1, 1A, 1B, 1C | magnetic geared motor |
|---|---|
| 10, 10A | stator |
| 11 | tooth |
| 12 | yoke |
| 13 | winding coil |
| 14 | stator magnet |
| 20, 20A | first center rotor |
| 21, 21A | first magnetic pole piece |
| 30, 30A | first inner rotor |
| 31 | first outer magnetic pole pair |
| 31A | first magnetic pole pair |
| 32 | first inner magnetic pole pair |
| 40, 50A | second center rotor |
| 40A, 50 | second inner rotor |
| 41 | second magnetic pole piece |
| 41A | second magnetic pole pair |
| 51 | second magnetic pole pair |
| 51A | second magnetic pole piece |
| 60A | first outer rotor |
| 60B | second outer rotor |
| 61A | third magnetic pole pair |
| 61B | fourth magnetic pole pair |
| 71 | first fixing member |
| 72 | second fixing member |

**Claims**

1. A magnetic geared motor, comprising:

   a stator;
   a first inner rotor that is disposed to an inner side of the stator in a radial direction and rotates by a magnetomotive force of the stator;
   a first center rotor that is disposed between the stator and the first inner rotor and rotates in response to rotation of the first inner rotor;
   a second center rotor disposed to an inner side of the first inner rotor in the radial direction; and
   a second inner rotor that is disposed to an inner side of the second center rotor in the radial direction and rotates in response to rotation of the first inner rotor and the second center rotor, wherein
   the stator, the first center rotor, the first inner rotor, the second center rotor, and the second inner rotor are disposed coaxial to each other, and
   the first inner rotor includes:

      a plurality of first outer magnetic pole pairs disposed in a circumferential direction; and
      a plurality of first inner magnetic pole pairs disposed in the circumferential direction.

2. The magnetic geared motor according to claim 1, wherein
   the first center rotor and the second center rotor are coupled to each other.

3. The magnetic geared motor according to claim 1, wherein
   the second inner rotor, the second center rotor, and the plurality of first inner magnetic pole pairs each include a plurality of second magnetic pole pairs disposed in the circumferential direction.

4. The magnetic geared motor according to claim 1, wherein
   the second inner rotor, the second center rotor, and the plurality of first inner magnetic pole pairs each include a gear.

5. A magnetic geared motor, comprising:

   a stator;
   a first inner rotor that is disposed to an inner side of the stator in a radial direction and rotates by a magnetomotive force of the stator;
   a first center rotor that is disposed between the stator and the first inner rotor and rotates in response to rotation of the first inner rotor;
   a second inner rotor disposed next to the first inner rotor in an axial direction;
   a second center rotor disposed to an outer side of the second inner rotor in the radial direction and disposed next to the first center rotor in the axial direction; and
   an outer rotor disposed to an outer side of the second center rotor in the radial direction, wherein
   the stator, the first center rotor, the first inner rotor, the second center rotor, the second inner rotor, and the outer rotor are disposed coaxial to each other, and
   the first inner rotor includes a plurality of first magnetic pole pairs disposed in a circumferential direction.

6. The magnetic geared motor according to claim 5, wherein

   the second center rotor is coupled to the first center rotor, and
   the outer rotor rotates in response to rotation of the second inner rotor and the second center rotor.

7. The magnetic geared motor according to claim 5, wherein

   the outer rotor is coupled to the first center rotor, and
   the second center rotor rotates in response to rotation of the second inner rotor and the second outer rotor.

8. The magnetic geared motor according to claim 5, wherein

   the outer rotor is coupled to the first center rotor,
   the center rotor is coupled to the first inner rotor, and

the second inner rotor rotates in response to rotation of the second center rotor and the outer rotor.

9. The magnetic geared motor according to one of claim 6 and claim 7, wherein
the second inner rotor is coupled to the first inner rotor.

10. A magnetic geared motor, comprising:

a stator;
a first inner rotor that is disposed to an inner side of the stator in a radial direction and rotates by a magnetomotive force of the stator;
a first outer rotor that is disposed to an outer side of the stator in the radial direction and rotates in response to rotation of the first inner rotor;
a second inner rotor disposed next to the first inner rotor in an axial direction;
a second center rotor that is disposed to an outer side of the second inner rotor in the radial direction and disposed next to the stator in the axial direction; and
a second outer rotor disposed to an outer side of the second center rotor in the radial direction and disposed next to the first outer rotor in the axial direction, wherein
the stator, the first outer rotor, the first inner rotor, the second center rotor, the second inner rotor, and the second outer rotor are disposed coaxial to each other, and
the first inner rotor includes a plurality of first magnetic pole pairs disposed in a circumferential direction.

11. The magnetic geared motor according to claim 10, wherein

the second outer rotor is coupled to the first outer rotor, and
the second center rotor rotates in response to rotation of the second inner rotor and the second outer rotor.

12. The magnetic geared motor according to claim 10, wherein

the second outer rotor is coupled to the first outer rotor,
the second center rotor is coupled to the first inner rotor, and
the second inner rotor rotates in response to rotation of the second outer rotor and the second center rotor.

13. The magnetic geared motor according to claim 10, wherein

the second center rotor is coupled to the first outer rotor, and
the second outer rotor rotates in response to rotation of the second center rotor and the second inner rotor.

14. The magnetic geared motor according to any one of claims 11 to 13, wherein
the second inner rotor is coupled to the first inner rotor.

15. A magnetic geared motor, comprising:

a stator;
a first outer rotor that is disposed to an outer side of the stator in a radial direction and rotates by a magnetomotive force of the stator;
a first center rotor that is disposed between the stator and the first outer rotor and rotates in response to rotation of the first outer rotor;
a second center rotor disposed next to the first center rotor in an axial direction;
a second inner rotor disposed to an inner side of the second center rotor in the radial direction and disposed next to the stator in the axial direction; and
a second outer rotor disposed to an outer side of the second center rotor in the radial direction and disposed next to the first outer rotor in the axial direction, wherein
the stator, the first outer rotor, the second inner rotor, the first center rotor, the second center rotor, and the second outer rotor are disposed coaxial to each other, and
the first outer rotor includes a plurality of magnetic pole pairs disposed in a circumferential direction.

16. The magnetic geared motor according to claim 15, wherein

the second center rotor is coupled to the first center rotor, and
the second inner rotor rotates in response to rotation of the second center rotor and the second outer rotor.

17. The magnetic geared motor according to claim 15, wherein

the second inner rotor is coupled to the first center rotor, and
the second center rotor rotates in response to rotation of the second outer rotor and the second inner rotor.

18. The magnetic geared motor according to claim 15, wherein

the second center rotor is coupled to the first outer rotor,
the second inner rotor is coupled to the first center rotor, and
the second outer rotor rotates in response to rotation of the second center rotor and the second inner rotor.

19. The magnetic geared motor according to one of claim 16 and claim 17, wherein
the second outer rotor is coupled to the first outer rotor.

20. The magnetic geared motor according to any one of claims 5 to 19, wherein
the second inner rotor includes a plurality of second magnetic pole pairs disposed in the circumferential direction.

21. The magnetic geared motor according to any one of claims 5 to 19, wherein
the second outer rotor includes a plurality of third magnetic pole pairs disposed in the circumferential direction.

22. The magnetic geared motor according to any one of claims 5 to 19, wherein
the second inner rotor, the second center rotor, and the second outer rotor each include a gear.

# FIG. 1

# FIG. 2

## FIG. 3A

$F(\theta)$

$A$

$-\dfrac{\pi}{N_i}$    $0$    $\dfrac{\pi}{N_i}$    $\theta$

## FIG. 3B

$P(\theta)$

$P_0+P_a$

$P_0$

$P_0-P_a$

$-\dfrac{\pi}{N_c}$    $0$    $-\dfrac{\pi}{N_c}$    $\theta$

# FIG. 4

[Winding factor (first layer)]

| Winding factor (Wf) | | Number of inner rotor 1's pole pairs ($N_{i1}$) | | | | | | | | | |
|---|---|---|---|---|---|---|---|---|---|---|---|
| | | 1 | 2 | 3 | 4 | 5 | 6 | 7 | 8 | 9 | 10 |
| Number of slots ($N_{o1}$) | 3 | 0.83 | 0.83 | | | | | 0.83 | 0.83 | | |
| | 6 | 0.48 | 0.83 | | 0.83 | 0.48 | | | | | |
| | 9 | 0.33 | 0.61 | 0.83 | 0.94 | 0.94 | 0.83 | 0.61 | 0.33 | | |
| | 12 | 0.25 | 0.48 | | 0.83 | 0.92 | | 0.92 | 0.83 | | 0.48 |
| | 15 | 0.20 | 0.39 | | 0.71 | 0.83 | | 0.95 | 0.95 | | 0.83 |
| | 18 | 0.17 | 0.33 | 0.48 | 0.61 | 0.73 | 0.83 | 0.90 | 0.94 | | 0.94 |
| | 21 | 0.14 | 0.25 | | 0.54 | 0.65 | | 0.83 | 0.89 | | 0.95 |

EP 3 923 457 A1

# FIG. 5

[Gear ratio (second layer)]

| Gear ratio (Gr) | | Number of inner rotor 2's pole pairs ($N_{i2}$) | | | | | | | | | |
|---|---|---|---|---|---|---|---|---|---|---|---|
| | | 1 | 2 | 3 | 4 | 5 | 6 | 7 | 8 | 9 | 10 |
| Number of outer rotor 2's pole pairs ($N_{o2}$) | 1 | -5.0 | -1.3 | -0.7 | -0.5 | -0.4 | -0.3 | -0.3 | -0.2 | -0.2 | -0.2 |
| | 2 | 10.0 | -5.0 | -2.0 | -1.3 | -0.9 | -0.7 | -0.6 | -0.5 | -0.4 | -0.4 |
| | 3 | 5.0 | | -5.0 | -2.5 | -1.7 | -1.3 | -1.0 | -0.8 | -0.7 | -0.6 |
| | 4 | 4.0 | 10.0 | -20.0 | -5.0 | -2.9 | -2.0 | -1.5 | -1.3 | -1.1 | -0.9 |
| | 5 | 3.6 | 6.3 | 25.0 | -12.5 | -5.0 | -3.1 | -2.3 | -1.8 | -1.5 | -1.3 |
| | 6 | 3.3 | 5.0 | 10.0 | | -10.0 | -5.0 | -3.3 | -2.5 | -2.0 | -1.7 |
| | 7 | 3.2 | 4.4 | 7.0 | 17.5 | -35.0 | -8.8 | -5.0 | -3.5 | -2.7 | -2.2 |
| | 8 | 3.1 | 4.0 | 5.7 | 10.0 | 40.0 | -20.0 | -8.0 | -5.0 | -3.6 | -2.9 |
| | 9 | 3.0 | 3.8 | 5.0 | 7.5 | 15.0 | | -15.0 | -7.5 | -5.0 | -3.8 |
| | 10 | 2.9 | 3.6 | 4.5 | 6.3 | 10.0 | 25.0 | -50.0 | -12.5 | -7.1 | -5.0 |

# FIG. 6

[Models where gear ratio is integral multiple are removed]

| Gear ratio (Gr) | | Number of inner rotor 2's pole pairs ($N_{i2}$) | | | | | | | | | |
|---|---|---|---|---|---|---|---|---|---|---|---|
| | | 1 | 2 | 3 | 4 | 5 | 6 | 7 | 8 | 9 | 10 |
| Number of outer rotor 2's pole pairs ($N_{o2}$) | 1 | | -1.3 | -0.7 | -0.5 | -0.4 | -0.3 | -0.3 | -0.2 | -0.2 | -0.2 |
| | 2 | | | -2.0 | -1.3 | -0.9 | -0.7 | -0.6 | -0.5 | -0.4 | -0.4 |
| | 3 | | | | -2.5 | -1.7 | -1.3 | -1.0 | -0.8 | -0.7 | -0.6 |
| | 4 | | | -20.0 | | -2.9 | -2.0 | -1.5 | -1.3 | -1.1 | -0.9 |
| | 5 | | 6.3 | 25.0 | -12.5 | | -3.1 | -2.3 | -1.8 | -1.5 | -1.3 |
| | 6 | | | | | -10.0 | | -3.3 | -2.5 | -2.0 | -1.7 |
| | 7 | | 4.4 | 7.0 | 17.5 | -35.0 | -8.8 | | -3.5 | -2.7 | -2.2 |
| | 8 | | | 5.7 | | 40.0 | -20.0 | -8.0 | | -3.6 | -2.9 |
| | 9 | | 3.8 | | 7.5 | 15.0 | | -15.0 | -7.5 | | -3.8 |
| | 10 | | | 4.5 | 6.3 | | 25.0 | -50.0 | -12.5 | -7.1 | |

EP 3 923 457 A1

# FIG. 7

[Gear ratio]

| Gr | | Number of high speed rotor's pole pairs ($N_{i1}$) | | | | | | | | | |
|---|---|---|---|---|---|---|---|---|---|---|---|
| | | 1 | 2 | 3 | 4 | 5 | 6 | 7 | 8 | 9 | 10 |
| Number of slots ($N_{o1}$) | 3 | | 50.0 | | | | | 40.00 | | | |
| | 6 | | | | 50.00 | 77.00 | | | | | |
| | 9 | | 19.25 | | 91.00 | 98.00 | 50.00 | 80.00 | 170.00 | | |
| | 12 | | | | | 119.00 | | 133.00 | 50.00 | | 77.00 |
| | 15 | | 12.75 | | 66.50 | | | 66.00 | 69.00 | | 50.00 |
| | 18 | | | | 19.25 | 161.00 | | 125.00 | 91.00 | | 98.00 |
| | 21 | | 8.63 | | 37.50 | 78.00 | | | | | 46.50 |

EP 3 923 457 A1

# FIG. 8

[Winding factor × Gear ratio]

| WfXGr | | Number of high speed rotor's pole pairs ($N_{i1}$) | | | | | | | | | |
|---|---|---|---|---|---|---|---|---|---|---|---|
| | | 1 | 2 | 3 | 4 | 5 | 6 | 7 | 8 | 9 | 10 |
| Number of slots ($N_{o1}$) | 3 | | 41.3 | | | | | 33.1 | | | |
| | 6 | | | | 41.3 | 36.8 | | | | | |
| | 9 | | 11.8 | | 85.6 | 92.2 | 41.3 | 49.1 | 55.5 | | |
| | 12 | | | | | 109.8 | | 122.7 | 41.3 | | 36.8 |
| | 15 | | 5.0 | | 47.2 | | | 62.7 | 65.5 | | 41.3 |
| | 18 | | | | 11.8 | 117.8 | | 112.2 | 85.6 | | 92.2 |
| | 21 | | 2.4 | | 20.2 | 50.7 | | | 206.2 | | 44.3 |

| $N_{i1}$ | $N_{O1}$ | $N_{i2}$ | $N_{O2}$ | Wf | Gr |
|---|---|---|---|---|---|
| 8 | 21 | 8 | 3 | 0.89 | 232 |

EP 3 923 457 A1

# FIG. 9

FIG. 10

# FIG. 11

FIG. 12

FIG. 13

## INTERNATIONAL SEARCH REPORT

| International application No. |
| --- |
| PCT/JP2020/004455 |

| A. CLASSIFICATION OF SUBJECT MATTER |
| --- |
| H02K 16/02(2006.01)i; F16H 49/00(2006.01)i<br>FI: H02K16/02; F16H49/00 A<br><br>According to International Patent Classification (IPC) or to both national classification and IPC |

| B. FIELDS SEARCHED |
| --- |
| Minimum documentation searched (classification system followed by classification symbols)<br>H02K16/02; F16H49/00 |

| Documentation searched other than minimum documentation to the extent that such documents are included in the fields searched |  |
| --- | --- |
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

| Electronic data base consulted during the international search (name of data base and, where practicable, search terms used) |
| --- |
|  |

| C. DOCUMENTS CONSIDERED TO BE RELEVANT | | |
| --- | --- | --- |
| Category* | Citation of document, with indication, where appropriate, of the relevant passages | Relevant to claim No. |
| Y | JP 2016-201996 A (SEIKO EPSON CORP.) 01.12.2016 (2016-12-01) paragraphs [0030]-[0035], [0137]-[0144], fig. 1-3, 28-29 | 1-4 |
| Y | WO 2007/072622 A1 (HONDA MOTOR CO., LTD.) 28.06.2007 (2007-06-28) paragraphs [0065]-[0074], fig. 1-2 | 1-9, 15-22 |
| Y | WO 2013/001557 A1 (HITACHI, LTD.) 03.01.2013 (2013-01-03) paragraphs [0020], [0035], fig. 1, 5 | 1-9, 15-22 |
| Y | JP 2015-61422 A (DENSO CORP.) 30.03.2015 (2015-03-30) paragraphs [0013]-[0017], fig. 1 | 1-4, 20-21 |
| X<br>Y | JP 2019-9899 A (DENSO CORP.) 17.01.2019 (2019-01 - 17) paragraphs [0011]-[0030], fig. 1-2 | 10-14<br>5-9, 15-22 |

☐ Further documents are listed in the continuation of Box C.     ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>03 April 2020 (03.04.2020) | Date of mailing of the international search report<br>14 April 2020 (14.04.2020) |
| --- | --- |
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**INTERNATIONAL SEARCH REPORT**
Information on patent family members

| International application No. |
| --- |
| PCT/JP2020/004455 |

| Patent Documents referred in the Report | Publication Date | Patent Family | Publication Date |
| --- | --- | --- | --- |
| JP 2016-201996 A | 01 Dec. 2016 | (Family: none) | |
| WO 2007/072622 A1 | 28 Jun. 2007 | EP 1971013 A1 paragraphs [0065]-[0074], fig. 1-2 CN 101341645 A | |
| WO 2013/001557 A1 | 03 Jan. 2013 | US 2014/0132099 A1 paragraphs [0029], [0044], fig. 1, 5 | |
| JP 2015-61422 A | 30 Mar. 2015 | US 2015/0076948 A1 paragraphs [0058]-[0062], fig. 1 DE 102014111848 A1 CN 104467325 A | |
| JP 2019-9899 A | 17 Jan. 2019 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2013106401 A